Europäisches Patentamt

European Patent Office

Office européen des brevets

(11) Veröffentlichungsnummer: **0 411 727 A1**

## (12) EUROPÄISCHE PATENTANMELDUNG

(21) Anmeldenummer: **90250186.5**

(22) Anmeldetag: **20.07.90**

(51) Int. Cl.5: **H02B 11/04**, H01H 1/42

(30) Priorität: **01.08.89 DE 3925824**

(43) Veröffentlichungstag der Anmeldung:
**06.02.91 Patentblatt 91/06**

(84) Benannte Vertragsstaaten:
**AT BE CH DE ES FR GB GR IT LI NL SE**

(71) Anmelder: **Siemens Aktiengesellschaft**
**Wittelsbacherplatz 2**
**D-8000 München 2(DE)**

(72) Erfinder: **Rössler, Karl-Heinz**
**Wilhelmsbaderstrasse 23**
**D-6457 Maintal 1(DE)**
Erfinder: **Feuerbach, Manfred**
**Hartmann-Ibach-Strasse 83**
**D-6000 Frankfurt 60(DE)**

(54) **Trennkontaktanordnung mit Messerkontaktteilen und gabelartigen Gegenkontaktteilen.**

(57)
2.1 Es wird eine Trennkontaktanordnung beschrieben, die zum Anschluß eines Schaltgerätes oder einer Schaltgerätekombination an ein ortsfestes Messerkontaktstück in einer Schaltanlage dient.

2.2 Die mit dem Messerkontaktstück (34) zusammenwirkende Gegenkontaktteile (1) sind als ebene Blechteile ausgebildet, die mit einem ebenfalls im wesentlichen ebenen Feder-Blechteil (13) zusammenwirken. Beide werden durch einen gemeinsamen Haltebolzen (35) gegeneinander ausgerichtet, der je eine kreisförmige Öffnung (4, 20) der Blechteile (1, 13) durchsetzt. Zur Übertragung der Federkraft sind in Kontaktarmen (5, 6) des Gegenkontakt-Blechteiles (1) Löcher (11) zum Eingreifen von Abwinklungen (17) von Federarmen (15, 16) des Feder-Blechteiles (13) vorgesehen.

2.3 Die Trennkontaktanordnung eignet sich für einschiebbare Schaltgeräte und Schaltgerätekombinationen in Niederspannungs-Schaltanlagen

FIG 5

EP 0 411 727 A1

# TRENNKONTAKTANORDNUNG MIT MESSERKONTAKTTEILEN UND GABELARTIGEN GEGENKONTAKTTEILEN

Die Erfindung betrifft eine Trennkontaktanordnung für ein Schaltgerät oder eine Schaltgerätekombination in einer elektrischen Schaltanlage, mit Messerkontaktteilen und mit diesen gabelartig zusammenwirkenden Gegenkontaktteilen, die durch wenigstens eine Feder gegeneinander vorgespannt sind.

Anordnungen dieser Art werden beispielsweise in Niederspannungs-Schaltanlagen eingesetzt um ausziehbar oder ausfahrbar angeordnete Geräte in Eingriff mit ortsfesten Kontaktteilen zu bringen. Insbesondere können Leistungsschalter auf diese Weise mit einspeisenden und wegführenden Stromschienen verbunden werden, sowie auf Einschübe montierte Schaltgerätekombinationen, wie sie beispielsweise zur Steuerung von Motorabgängen eingesetzt' werden. Eine Trennkontaktanordnung für den beschriebenen Zweck ist beispielsweise der US-A-4 486 636 zu entnehmen. Dort sind aus mehreren parallelen brückenartigen Teilkontaktstücken bestehende Kontaktblöcke vorgesehen, die einen Rahmen und an diesem abgestützte Blattfedern zur Vorspannung der Teilkontaktstücke aufweisen. Eine ähnliche Anordnung, jedoch unter Verwendung von Schraubendruckfedern, ist der EP-A-0 208 565 zu entnehmen.

Der Erfindung liegt die Aufgabe zugrunde, eine Trennkontaktvorrichtung mit hoher Kontaktsicherheit zu schaffen, deren Einzelteile aus einfachen Ausgangsmaterialien und gleichfalls mittels einfacher Bearbeitungsverfahren herstellbar sind.

Die Erfindung löst diese Aufgabe durch folgende Merkmale:

a) Die Gegenkontaktteile und die Feder sind als im wesentlichen ebene einstückige Blechteile ausgebildet;

b) die Blechteile sind flächenhaft aneinanderliegend angeordnet,

c) das die Feder bildende Blechteil (Feder-Blechteil) besitzt etwa entsprechend der Dicke des Materials des die Gegenkontaktteile bildenden Blechteiles (Gegenkontakt-Blechteil) bemessene Abwinklungen und

d) das Gegenkontakt-Blechteil besitzt Öffnungen zum Eingreifen der Abwinklungen des Feder-Blechteiles.

Auf diese Weise wird die Anwendung von Profil-, Schmiede- oder anderen Formteilen vermieden ebenso wie mehrstufige Präge- und Biegevorgänge bei der Herstellung aus Blech. Vielmehr sind Stanzverfahren anwendbar, wodurch sich die Erfindung für eine in großen Stückzahlen und preiswert herstellbare Trennkontaktvorrichtung für Niederspannungs-Schaltanlagen eignet.

An sich ist es bereits bei Sicherungsunterteilen bekannt, aus Blech bestehende gabelartige Gegenkontaktteile vorzusehen (DE-A-1 640 552). Jedoch sind diese Blechteile zur Befestigung an dem Sicherungssockel abgewinkelt und wirken auch nicht mit einem aus Blech bestehenden ebenen Federteil zusammen. Stattdessen wird ein in Führungen gehaltenes Drahtfederteil verwendet.

Das Gegenkontakt-Blechteil und das Feder-Blechteil können jeweils eine kreisförmige Ausnehmung zur Aufnahme eines gemeinsamen Haltebolzens aufweisen. Der Haltebolzen kann beispielsweise aus handelsüblichem Rundmaterial gefertigt sein und ist daher gleichfalls auf besonders einfache Weise bereitstellbar. Zugleich hat diese Art der Befestigung der Blechteile den Vorteil, daß wahlweise mehrere Paare von Gegenkontakt-Blechteilen und Feder-Blechteilen zur Bildung einer Trennkontaktanordnung für eine größere Nennstromstärke in paralleler Anordnung fluchtend angeordnet werden können. Jedoch können auch einzelne Kontaktsätze aus jeweils einem Gegenkontaktteil und einen Feder-Blechteil in getrennten Abteilen eines aus Isolierstoff bestehenden Gehäuses gegeneinander isoliert eingesetzt sein. Diese Anordnung eignet sich zum Anschluß mehrerer Geräte an ein und dieselbe Sammelschiene.

Zur Beeinflussung der Federungseigenschaft des GegenkontaktBlechteiles kann ausgehend von einer zur Aufnahme des Messerkontaktteiles vorgesehenen Ausnehmung ein bis zu der kreisförmigen Ausnehmung reichender Einschnitt vorgesehen sein. Je nach der Länge dieses Einschnittes wird die auf das Messerkontaktstück auszuübende Kontaktkraft dann im wesentlichen durch das parallel angeordnete Feder-Blechteil bestimmt.

Ferner kann die kreisförmige Öffnung des Feder-Blechteiles zum Rande des Blechteiles hin offen und gegenüber dem Haltebolzen mit einem Untermaß ausgebildet sein, und vom gegenüberliegenden Bereich der kreisförmigen Öffnung kann sich ein Einschnitt in Richtung einer Federschenkel bildenden Ausnehmung erstrecken. Hierdurch wird ein definierter Querschnitt für die Biegung der Federschenkel in Richtung zueinander beim Einführen des Haltebolzens in die kreisförmige Öffnung geschaffen. Die sich auf diese Weise ergebende Vorspannung der Gegenkontakt-Blechteiles wird somit durch das Untermaß der kreisförmigen Öffnung des Feder-Blechteiles gegenüber dem Haltebolzen beeinflußt.

Die Erfindung wird im folgenden anhand des in den Figuren dargestellten Ausführungsbeispieles näher erläutert.

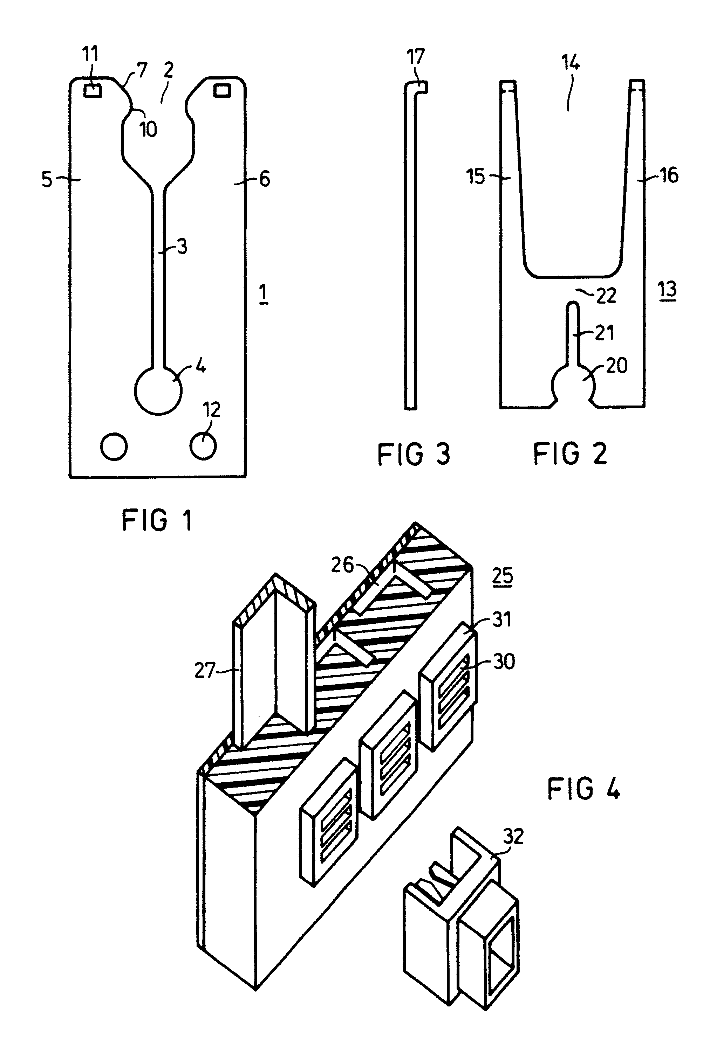

Die Figur 1 zeigt ein Gegenkontakt-Blechteil in der Draufsicht.

Ein Feder-Blechteil ist gleichfalls in der Draufsicht in der Figur 2 gezeigt.

Die Figur 3 zeigt das Feder-Blechteil gemäß der Figur 2 in einer Seitenansicht.

Die Figur 4 zeigt in einer perspektivischen Ansicht schematisch einen Sammelschienenhalter als ortsfesten Teil einer Trennkontaktvorrichtung un einen zugehörigen bewegbaren Teil.

In der Figur 5 ist teilweise im Schnitt ein ortsfester und ein bewegbarer Teil einer Trennkontaktvorrichtung unter Verwendung von Teilen gemäß den Figuren 1 bis 3 gezeigt.

Zunächst werden anhand der Figuren 1, 2 und 3 wesentliche Einzelteile der Trennkontaktanordnung erläutert. Ein in der Figur 1 in der Draufsicht gezeigtes Gegenkontakt-Blechteil 1 weist bei einer etwa rechteckigen Grundform eine Ausnehmung 2, einen hieran anschließenden Einschnitt 3 sowie eine an dessen Ende angeordnete kreisförmige Ausnehmung 4 auf. Auf diese Weise werden zwei Kontaktarme 5 und 6 gebildet, die nahe der Mündung der Ausnehmung 2 mit einer Einführschräge 7 und einer anschließenden gewölbten Kontaktfläche 10 versehen sind. Aufgrund der Lage der kreisförmigen Ausnehmung 4 nahe dem den Kontaktflächen 10 gegenüberliegenden Ende des rechteckigen Teiles besitzen die Kontaktarme 5 und 6 eine ausreichende Länge, zur Federung beim Einführung eines Messerkontaktes in die Ausnehmung 2. Nahe der Mündung dieser Ausnehmung sind die Kontaktarme 5 und 6 mit einem etwa rechteckigen Loch 11 versehen, dessen Aufgaben noch erläutert werden. Am gegenüberliegenden Ende ist das Gegenkontakt-Blechteil 1 unterhalb der kreisförmigen Ausnehmung 4 mit zwei Löchern 12 zum Anschluß eines Leiters, z. B. eines biegsamen Strombandes versehen. Mit Rücksicht auf seinen Zweck kann das Gegenkontakt-Blechteil aus einem gutleitenden Werkstoff, z. B. Kupferblech mit vollständiger oder nur die Kontaktflächen 10 bedeckender Versilberung hergestellt sein. Ein solcher Werkstoff vermag jedoch nicht dauerhaft die für einen sicheren Stromübergang erforderliche Kontaktkraft im Bereich der Kontaktflächen 10 aufzubringen. Diese wird vielmehr durch ein Feder-Blechteil gemäß den Figuren 2 und 3 erzeugt.

Auch das Feder-Blechteil 13 weist eine etwa recheckige Grundform mit einer Ausnehmung 14 zur Bildung vorn zwei Federarmen 15 und 16 auf. Diese Federarme sind, wie in der Figur 2 gestrichelt angedeutet und in der Figur 3 in der Seitenansicht erkennbar, am oberen Ende mit einer scharfkantigen Abwinklung 17 versehen. Diese dient dient zum Eingreifen in die rechteckigen Löcher 11 des Gegenkontakt-Blechteiles 1 gemäß der Figur 1. Abgesehen von diesen Abwinklungen 17 ist auch das Feder-Blechteil 13 vollkommen eben. Beide Teile sind somit flach aneinanderliegend montierbar und bilden eine Kontakteinheit.

Im unteren Bereich ist das Feder-Blechteil 13 gleichfalls mit einer etwa kreisförmigen Ausnehmung 20 versehen, die zum Rand des Feder-Blechteiles 13 offen ist. Vom gegenüberliegenden Bereich der kreisförmigen Ausnehmung 20 ausgehend in Richtung auf den Boden der Ausnehmung 14 erstreckt sich ein Einschnitt 21, so daß ein bei 22 dargestellter Restquerschnitt verbleibt. Der Zweck dieser Gestaltung besteht darin, beim Einführen eines Haltebolzens in die kreisförmige Ausnehmung 20, die zweckmäßig gegenüber diesem Haltebolzen mit einem Untermaß ausgeführt ist, eine Spreizung des Feder-Blechteiles 13 im unteren Bereich und dadurch eine Schwenkung der Federarme 15 und 16 in Richtung aufeinander um den Restquerschnitt 22 als ideellen Drehpunkt zu bewirken. Auf diese Weise wird eine Vorspannung auf die Kontaktarme 5 und 6 des Gegenkontakt-Blechteiles 1 in Figur 1 ausgeübt. Um die gewünschten Feder-wege und Kräfte zu erzielen, empfiehlt es sich, das FederBlechteil 13 aus einem Federstahl herzustellen, dessen Eigenschaften im Bedarfsfall noch durch eine Wärmebehandlung beeinflußt werden können.

Ausgangsmaterial für die Herstellung sowohl des GegenkontaktBlechteiles 1 als auch des Feder-Blechteiles 13 sind somit blechförmige oder bandförmige Materialien, die sich durch Stanzen - und im Fall des Feder-Blechteiles 13 durch Biegen -bearbeiten lassen. In der Regel genügt ein einziger Bearbeitungsgang, um ein vollständiges Teil der gezeigten Art zu gewinnen.

Die Anwendung der in den Figuren 1, 2 und 3 gezeigten Teile ist in der Figur 4 veranschaulicht. Wie dort gezeigt, enthält ein Sammelschienenhalter 25 etwa L-förmige Durchtrittsöffnungen 26 für Sammelschienen 27 mit einer entsprechenden Querschnittsform. Diese Anordnung kann beispielsweise an einer Seitenwand oder einer Rückwand eines Schaltschrankes angeordnet sein, um ausziehbare Schaltgeräte mit einer Feldsammelschiene zu verbinden. Gleichartige Trennkontaktanordnungen können auch für die Abgangsseite der Schaltgeräte bzw. Schaltgerätekombination vorgesehen sein. Für den Eingriff der geräteseitigen Gegenkontakte ist der Sammelschienenhalter 25 mit Einführungsöffnungen 30 versehen, die sich an sockelartigen Erhebungen 31 befinden. Die aus den beschriebenen Gegenkontakt- und FederBlechteilen bestehenden Kontaktsätze sind in einem steckerartigen Isolierstoffgehäuse 32 angeordnet, wobei entsprechend der Anzahl von Einführungsöffnungen 30 eine entsprechende Anzahl von Kontaktsätzen vorhanden ist. Diese können elektrisch parallel geschaltet sein, wenn ein hoher Nennstrom zu führen ist, oder die einzelnen Kontaktsätze können getrennten Stromkreisen zugeordnet sein.

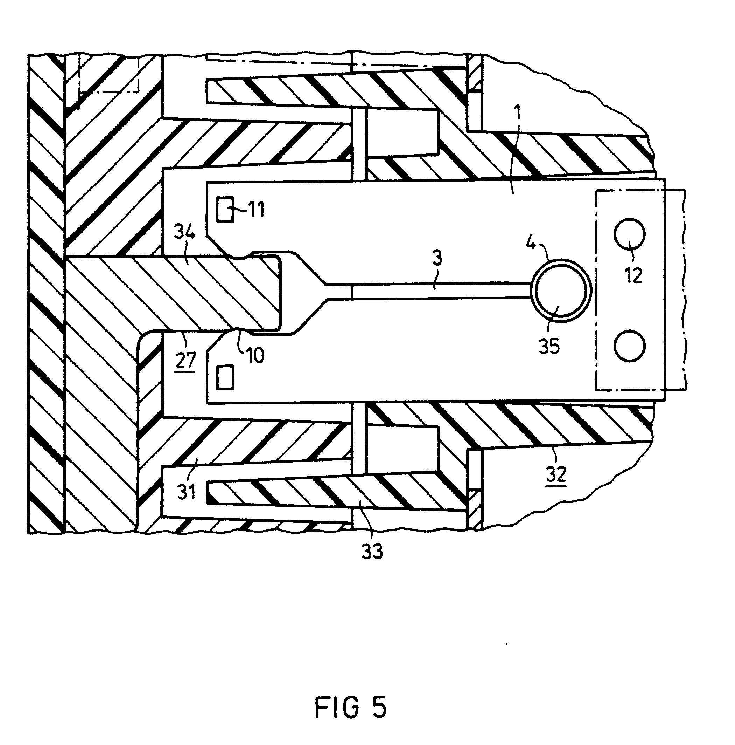

Weitere Einzelheiten des Zusammenwirkens zwischen einer Sammelschiene 27 und den beschriebenen Kontaktsätzen sind in der Figur 5 gezeigt, in der sich die Teile im Eingriff miteinander befinden. Wie man erkennt, übergreift das Isolierstoffgehäuse 32 die sockelartige Erhebung 31 mit einem Schutzkragen 33. Hierdurch entsteht ein vorteilhaft langer Kriechweg zwischen den verschiedenen Phasen zugeordneten benachbarten Sammelschienen 27. Die Federarme 5 und 6 liegen mit ihren balligen Kontaktflächen 10 an den Seitenflächen des nach vorn weisenden Schenkels 34 der Sammelschiene 27 an. Die Federarme 15 und 16 sorgen dabei für eine ausreichende Kontaktkraft. Aufgrund der seitlichen Einleitung der Federkraft kann dabei eine Biegung der Kontaktarme 5 und 6 quer zur Ebene des Gegenkontakt-Blechteiles 1 auftreten. Dies führt zu einer für die Kontaktgabe günstigen Wälzbewegung beim Zusammenfügen der Kontaktteile.

Ein Haltebolzen 35 verbindet die jeweils einen Konaktsatz bildenden Gegenkontakt-Blechteile und Feder-Blechteile. Dabei kann jedoch das Isolierstoffgehäuse 32 in einzelne Kammern derart unterteilt sein, daß einzelne kurze Haltebolzen für jeden Kontaktsatz verwendet werden und somit die benachbarten Kontaktsätze nicht miteinander elektrisch verbunden sind. Auf diese Weise können, wie bereits erwähnt, mehrere Geräte unabhängig gespeist werden.

**Ansprüche**

1. Trennkontaktanordnung für ein Schaltgerät oder eine Schaltgerätekombination in einer elektrischen Schaltanlage, mit Messerkontaktteilen (34) und mit diesen gabelartig zusammenwirkenden Gegenkontaktteilen (1), die durch wenigstens eine Feder (13) gegeneinander vorgespannt sind,
**gekennzeichnet durch** folgende Merkmale:
    a) Die Gegenkontaktteile und die Feder sind als im wesentlichen ebene einstückige Blechteile (1, 13) ausgebildet,
    b) die Blechteile (1, 13) sind flächenhaft aneinanderliegend angeordnet,
    c) das die Feder bildende Blechteil (Feder-Blechteil 1) besitzt etwa entsprechend der Dicke des Materials des die Gegenkontaktteile bildenden Blechteiles (Gegenkontakt-Blechteil) bemessene Abwinklungen (17),
    d) das Gegenkontakt-Blechteil (1) besitzt Öffnungen (11) zum Eingreifen der Abwinklungen (17) des Feder-Blechteiles (13).

2. Trennkontaktanordnung nach Anspruch 1, **dadurch gekennzeichnet,** daß das Gegenkontakt-Blechteil (1) und das Feder-Blechteil (13) jeweils eine kreisförmige Ausnehmung (4, 20) zur Aufnahme eines gemeinsamen Haltebolzens (35) aufweisen.

3. Trennkontaktanordnung nach Anspruch 2, **dadurch gekennzeichnet,** daß das Gegenkontakt-Blechteil (1) ausgehend von einer zur Aufnahme eines Messerkontaktteiles (34) vorgesehenen Ausnehmung (2) einen bis zu der kreisförmigen Ausnehmung (4) reichenden Einschnitt (3) besitzt.

4. Trennkontaktanordnung nach Anspruch 2, **dadurch gekennzeichnet,** daß die kreisförmige Öffnung (20) des Feder-Blechteiles (13) zum Rande des Blechteiles (13) hin offen und gegenüber dem Haltebolzen (35) mit einem Untermaß ausgebildet ist und daß sich vom gegenüberliegenden Be reich der kreisförmigen Öffnung (20) ein Einschnitt (21) in Richtung einer Federschenkel (15, 16) bildenden Ausnehmung (14) erstreckt.

5. Trennkontaktanordnung nach Anspruch 1 , **dadurch gekennzeichnet,** daß mehrere, jeweils aus einem Gegenkontaktteil (1) und einem Feder-Blechteil (13) gebildete Kontaktsätze in getrennten Abteilen eines aus Isolierstoff bestehenden Gehäuses (32) gegeneinander isoliert eingesetzt sind.

FIG 1

FIG 3

FIG 2

FIG 4

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | DE-U-8711936 (RITTER STARKSTROM GMBH)<br>* Seite 9, letzter Absatz - Seite 12, Absatz 1; Figuren 5-7 * | 1-3, 5 | H02B11/04<br>H01H1/42 |
| | --- | | |
| Y | DE-A-2358105 (SIEMENS AG)<br>* Seite 3, Absatz 2 - Seite 4, letzter Absatz; Figuren 1, 2 * | 1-3, 5 | |
| | --- | | |
| A | US-A-4180846 (WILSON ET AL)<br>* Spalte 7, Zeile 5 - Spalte 8, Zeile 5; Figuren 8, 9 * | 1 | |
| | ----- | | |

**RECHERCHIERTE SACHGEBIETE (Int. Cl.5 )**

H02B
H01H

Der vorliegende Recherchenbericht wurde für alle Patentansprüche erstellt

| Recherchenort | Abschlußdatum der Recherche | Prüfer |
|---|---|---|
| DEN HAAG | 11 OKTOBER 1990 | WOODALL C.G. |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes
  Dokument